# EUROPEAN PATENT SPECIFICATION

(11) **EP 3 518 008 B1**
(45) Date of publication and mention of the grant of the patent: **29.06.2022**
(21) Application number: 17853427.7
(22) Date of filing: 21.09.2017
(51) Int. Cl.: G02B 5/30, G02B 1/14, G02B 1/04, G02B 1/16, C08J 7/04, C09D 133/14, C08L 65/00, C08J 5/18, C08L 33/00, G02B 1/116

(54) **OPTICAL FILM HAVING EXCELLENT ANTISTATIC PROPERTY AND POLARIZING PLATE COMPRISING SAME**
OPTISCHE FOLIE MIT HERVORRAGENDER ANTISTATISCHER EIGENSCHAFT UND POLARISIERUNGSPLATTE DAMIT
FILM OPTIQUE AYANT UNE EXCELLENTE PROPRIÉTÉ ANTISTATIQUE ET PLAQUE POLARISANTE LE COMPRENANT

(30) Priority: 21.09.2016 KR 20160120832; 21.09.2016 KR 20160120840; 20.09.2017 KR 20170121177
(43) Date of publication of application: 31.07.2019
(73) Proprietor: ANHUI HEMEI MATERIALS TECHNOLOGY CO., LTD., Hefei City, Anhui Province 231100 (CN)
(72) Inventor: KIM, Kyoung Won, Daejeon 34122 (KR); JUNG, Jae Ho, Daejeon 34122 (KR); PARK, Ji Sung, Daejeon 34122 (KR); PARK, Jun Wuk, Daejeon 34122 (KR); LIM, Yirang, Daejeon 34122 (KR); KWON, Hyun Cheol, Daejeon 34122 (KR); CHOI, Kwang Hui, Daejeon 34122 (KR)
(74) Representative: Lavoix
(86) International application number: PCT/KR2017/010377
(87) International publication number: WO 2018/056713

(56) References cited:
- WO-A1-2006/043448
- JP-A- 2016 150 976
- KR-A- 20090 063 237
- KR-A- 20130 080 596
- KR-A- 20160 056 533
- KR-A- 20160 079 162
- KR-B1- 101 408 712
- US-A1- 2016 231 484

## Description

### [Technical Field]

The present specification claims priority to and the benefits of Korean Patent Application No. 10-2016-0120832, filed with the Korean Intellectual Property Office on September 21, 2016, Korean Patent Application No. 10-2016-0120840, filed with the Korean Intellectual Property Office on September 21, 2016, and Korean Patent Application No. 10-2017-0121177, filed with the Korean Intellectual Property Office on September 20, 2017

The present specification relates to an optical film having excellent anti-static property and surface treatment performance, and a polarizing plate including the same.

### [Background Art]

Polarizing plates have been commonly used in a structure of a protective film being laminated on one surface or both surfaces of a polarizer formed with a polyvinyl alcohol (hereinafter, referred to as 'PVA')-based resin dyed with dichroic dye or iodine using an adhesive. Triacetyl cellulose (TAC)-based films have been normally used as a polarizing plate protective film in the art, however, such TAC films have a problem of being readily deformed under high temperature and high humidity environments. Accordingly, protective films made of various materials capable of replacing TAC films have been recently developed, and for example, a method of using polyethylene terephthalate (PET), a cycloolefin polymer (COP), an acryl-based film or the like either alone or as a mixture thereof has been proposed.

However, such protective films have had a problem in that adhesive strength with aqueous adhesives that have been normally used in the art for adhering a PVA film and a protective film is not sufficient. In order to resolve such a problem, a method of enhancing adhesive strength with aqueous adhesives by forming a primer layer using a polyurethane-based primer including a carboxyl group on a surface of polyethylene terephthalate (PET), a cycloolefin polymer (COP), an acryl-based film or the like has been proposed.

Meanwhile, polyethylene terephthalate (PET), a cycloolefin polymer (COP), an acryl-based film and the like have lower moisture permeability compared to TAC, and have a problem in that drying is difficult since, when using an aqueous adhesive, moisture included in the adhesive is not able to penetrate the film, and therefore, non-aqueous adhesives for replacing aqueous adhesives have been recently developed. Likewise, primer layers capable of enhancing adhesive strength with non-aqueous adhesives have been developed as well.

In addition, a polarizer protective film such as above may generally include various surface treatment coating layers such as an anti-reflective layer and a hard coating layer on a surface opposite to the polarizer-attached surface with the purpose of anti-reflection, enhancing durability, preventing scratches, improving visibility or the like. Such surface treatment coating layers are generally formed using a method of coating a coating composition including a base resin, a solvent, additives and the like on a protective film, and then curing the result. However, depending on the protective film types, adhesive strength with such a surface treatment coating layer is not sufficient sometimes, and this leads to a problem of declining polarizing plate performance by the surface treatment coating layer being peeled off from the protective film, or being damaged.

In view of the above, methods of carrying out surface treatment such as plasma treatment or corona treatment on the surface of a protective film, or forming a primer layer have been proposed, however, methods that have been proposed so far have not been able to sufficiently secure adhesive strength between a protective film, particularly an acryl-based protective film, and a surface treatment coating layer. For example, urethane-based resins that have been proposed in the art as a primer layer for a protective film have low water resistance and solvent resistance, and therefore, there have been problems such that adhesive strength is reduced due to moisture penetration when the primer layer is stored for a long period of time under a high humidity condition, or, when a coating composition including an organic solvent is coated on a primer layer, the primer layer is dissolved due to the solvent included in the coating composition leading to a problem of the primer layer being desorbed from the film.

In addition, the surface treatment coating layer sometimes needs to have anti-static performance as well, and when an anti-static material is added to an existing surface treatment coating composition, there is a problem in that an anti-static property is reduced by organic-inorganic beads added for a glare reducing property and preventing blocking, and, when increasing the anti-static material content to complement property reduction, color changes occur due to bluish.

Accordingly, development of films capable of increasing attachment strength with the surface treatment coating layer by increasing solvent resistance of a protective film primer layer while maintaining an anti-static property even after the surface treatment coating by treating an anti-static material has been required.

### [Disclosure]

### [Technical Problem]

The present specification is directed to providing an optical film having excellent anti-static property, attachment strength and surface treatment performance, and a polarizing plate including the same.

### [Technical Solution]

One embodiment of the present specification provides an optical film including a transparent base; an anti-static primer layer provided on at least one surface of the transparent base, and including a binder resin including a sulfonic acid polyester acryl-based resin, and an anti-static material; and a surface treatment coating layer provided on the anti-static primer layer.

Another embodiment of the present specification provides a polarizing plate including a polarizer; and the optical film described above provided on at least one surface of the polarizer.

### [Advantageous Effects]

An optical film of the present disclosure is provided with an anti-static primer layer including a binder resin including a sulfonic acid polyester acryl-based resin, and an anti-static material on at least one surface of a transparent base; and a surface treatment coating layer, and as a result, an optical film having excellent anti-static property, coating appearance property and attachment strength can be prepared.

### [Description of Drawings]

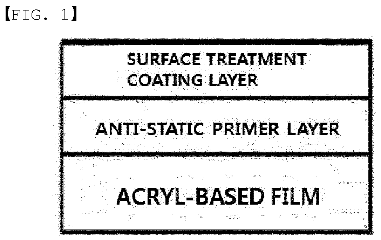

FIG. 1 illustrates a lamination structure of an optical film according to one embodiment of the present disclosure.

### [Mode for Disclosure]

Hereinafter, preferred embodiments of the present disclosure will be described. However, embodiments of the present disclosure may be modified to various different forms, and the scope of the present disclosure is not limited to the embodiments described below. In addition, embodiments of the present disclosure are provided in order to more fully describe the present disclosure to those having average knowledge in the art.

An optical film according to the present disclosure includes a transparent base; an anti-static primer layer provided on at least one surface of the transparent base, and including a sulfonic acid polyester acryl-based resin and an anti-static material; and a surface treatment coating layer provided on the anti-static primer layer.

The term "substituted or unsubstituted" in the present specification means being substituted with one or more substituents selected from the group consisting of deuterium; a halogen group; an alkyl group; and an aryl group, or being unsubstituted, or being substituted with a substituent linking two or more substituents among the substituents illustrated above, or being unsubstituted. For example, "a substituent linking two or more substituents" may include a biphenyl group. In other words, a biphenyl group may be an unsubstituted aryl group, or interpreted as a substituent linking two phenyl groups.

In the present specification, 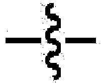 means a site bonding to other substituents or bonding sites.

In the present specification, examples of the halogen group may include fluorine, chlorine, bromine or iodine.

In the present specification, the alkyl group may be linear or branched, and although not particularly limited thereto, the number of carbon atoms is preferably from 1 to 30. According to one embodiment, the number of carbon atoms of the alkyl group is from 1 to 20. According to another embodiment, the number of carbon atoms of the alkyl group is from 1 to 10. According to another embodiment, the number of carbon atoms of the alkyl group is from 1 to 6. Specific examples of the alkyl group may include a methyl group, an ethyl group, a propyl group, an isopropyl group, a butyl group, a tert-butyl group, a sec-butyl group, a pentyl group, a hexyl group and the like, but are not limited thereto.

In the present specification, the aryl group is not particularly limited, but preferably has 6 to 60 carbon atoms, and may be a monocyclic aryl group or a multicyclic aryl group. According to one embodiment, the number of carbon atoms of the aryl group is from 6 to 30. According to one embodiment, the number of carbon atoms of the aryl group is from 6 to 20. When the aryl group is a monocyclic aryl group, examples thereof may include a phenyl group, a biphenyl group, a terphenyl group, a tetraphenyl group and the like, but are not limited thereto. Examples of the multicyclic aryl group may include a naphthyl group, an anthracenyl group, a phenanthryl group, a pyrenyl group, a perylenyl group, a chrysenyl group, a triphenylenyl group, a fluorenyl group and the like, but are not limited thereto.

In the present disclosure, being transparent means having visible transmittance of 80% or greater and preferably 90% or greater.

In the present specification, (meth)acryl-based means including an acrylic or methacrylic functional group.

In the present disclosure, the polyester acryl-based resin is a resin including an ester-based monomer and an acryl-based monomer. The polyester acryl-based resin is prepared by copolymerizing an acryl-based monomer component to polyester glycol, and may preferably be a water-dispersible polyester acryl-based resin.

Herein, the polyester glycol is formed through a reaction between a polybasic acid and a polyol.

Examples of the polybasic acid component may include aromatic dicarboxylic acids such as ortho-phthalic acid, isophthalic acid, terephthalic acid, 1,4-naphthalenedicarboxylic acid, 2,5-naphthalenedicarboxylic acid, 2,6-naphthalenedicarboxylic acid, biphenyldicarboxylic acid or tetrahydrophthalic acid; aliphatic dicarboxylic acids such as oxalic acid, succinic acid, malonic acid, glutaric acid, adipic acid, pimellic acid, suberic acid, azelaic acid, sebacic acid, linoleic acid, maleic acid, fumaric acid, mesaconic acid or itaconic acid; alicyclic dicarboxylic acids such as hexahydrophthalic acid, tetrahydrophthalic acid, 1,3-cyclohexanedicarboxylic acid or 1,4-cyclohexanedicarboxylic acid; or reactive derivatives such as acid anhydrides, alkyl esters or acid halides thereof, but are not limited thereto, and may include one, two or more types selected from the group consisting of these. Among these, terephthalic acid, isophthalic acid, succinic acid and the like are particularly preferred. In addition, using sulfonate-substituted isophthalic acid as a basic acid is particularly preferred in terms of water dispersibility.

Meanwhile, the polyol is not particularly limited as long as it has two or more hydroxyl groups in the molecule, and any proper polyol may be employed. For example, the polyol is preferably at least one type selected from the group consisting of ethylene glycol, 1,2-propanonediol, 1,3-propanediol, 1,3-butanediol, 1,4-butanediol, neopentyl glycol, pentanediol, 1,6-hexanediol, 1,8-octanediol, 1,10-decanediol, 4,4'-dihydroxyphenylpropane, 4,4'-dihydroxymethylmethane, diethylene glycol, triethylene glycol, polyethylene glycol (PEG), dipropylene glycol, polytetramethylene glycol (PTMG), polypropylene glycol (PPG), 1,4-cyclohexanedimethanol, 1,4-cyclohexanediol, bisphenol A, bisphenol F, glycerin, 1,1,1-trimethylolpropane, 1,2,5-hexatriol, pentaerythritol, glucose, sucrose and sorbitol. As the polyol, using a carboxyl group-containing dimethylol alkanoic acid, dimethylol acetic acid, dimethylol propionic acid and dimethylol methylbutyric acid and the like either alone or as a combination of two or more types is particularly preferred in terms of water dispersibility.

Meanwhile, the polyester glycol is preferably formed by reacting the polybasic acid and the polyol in a molar ratio of 2.5:1 to 1:2.5, preferably in a molar ratio of 2.3:1 to 1:2.3 and more preferably in a molar ratio of 2:1 to 1:2. The reaction molar ratio of the polybasic acid and the polyol being outside the above-mentioned range may cause a smell due to unreacted monomers, or may cause poor coating.

The polyester glycol is formed through a reaction between the polybasic acid and the polyol, and when preparing the polyester glycol, a catalyst such as tetramethyl titanate, antimony acetate or t-butyltin oxide and/or a stabilizer such as trimethyl phosphate may be further included.

Meanwhile, examples of the acryl-based monomer may include one or more types selected from the group consisting of alkyl (meth)acrylate, alkyl acrylate, hydroxyalkyl acrylate, carbonyl group-including alkyl (meth)acrylate, alkyl acrylic acid, and sulfonic acid salt-including acrylate. Herein, examples of the sulfonic acid salt-including acrylate may include sodium 2-methyl-2-propene-1-sulfonic acid salt-including acrylate, sodium aryl sulfonic acid salt-including acrylate, 2-propene-1-sulfonic acid salt-including acrylate and the like, but are not limited thereto. Meanwhile, copolymerizing, among the acryl-based monomers, an epoxy group-containing epoxy acrylate monomer to a polyester resin has an advantage of increasing high temperature stability by enhancing high temperature durability of the polyester main chain while the epoxy rings are dissociated at a high temperature, and are crosslinked due to an addition polymerization reaction between the epoxy rings.

In addition, the polyester acryl-based resin is prepared by, as necessary, copolymerizing other monomers in addition to the acrylic monomer component. Herein, as the other monomers, one, two or more types selected from the group consisting of unsaturated nitriles such as (meth)acrylonitrile; unsaturated amides such as (meth)acrylimide; olefins such as ethylene or propylene; β-unsaturated aliphatic monomers such as halogenated vinyl chloride or vinylidene chloride; β-unsaturated aromatic monomers such as styrene or methylstyrene may be included.

According to one embodiment, two or more types of acryl-based monomers are included in the polyester acryl-based resin of the present specification, and in another embodiment, alkyl (meth)acrylate monomers, and epoxy (meth)acrylate monomers such as glycidyl (meth)acrylate are included.

In addition, in the polyester acryl-based resin, a weight ratio of the polyester glycol and the acryl-based monomer is from 1:9 to 9:1, more preferably from 2:8 to 8:2, and most preferably from 3:7 to 7:3 in the reactant, however, the ratio is not limited thereto. When the content of the polyester glycol and the content of the acryl-based monomer satisfy the above-mentioned numerical range in the reactant, properties such as adhesion with a base and solvent resistance are excellent.

The sulfonic acid polyester acryl-based resin of the present disclosure includes a sulfonic acid salt-including monomer, and, with respect to 100 parts by weight (based on solid) of the sulfonic acid polyester acryl-based resin, includes the sulfonic acid salt-including monomer in 4 parts by weight to 7 parts by weight. The sulfonic acid salt-including monomer may be more preferably included in 5 parts by weight to 6 parts by weight, and when including the sulfonic acid salt-including monomer in the above-mentioned content range, resin emulsion particles are uniform and dispersibility is superior.

The sulfonic acid ester acryl-based resin includes a monomer represented by the following Chemical Formula 1.

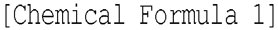

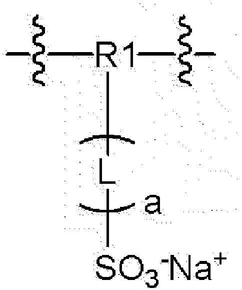

In Chemical Formula 1,
R1 is a substituted or unsubstituted trivalent alkyl group; or a substituted or unsubstituted trivalent aryl group,
L is a direct bond; a substituted or unsubstituted divalent alkyl group; or a substituted or unsubstituted divalent aryl group,
a is an integer of 0 to 3, and
when a is 2 or greater, two or more Ls are the same as or different from each other.

According to one embodiment of the present specification, R1 is a substituted or unsubstituted trivalent alkyl group having 1 to 30 carbon atoms; or a substituted or unsubstituted trivalent aryl group having 6 to 60 carbon atoms.

According to another embodiment, R1 is a substituted or unsubstituted trivalent alkyl group having 1 to 20 carbon atoms; or a substituted or unsubstituted trivalent aryl group having 6 to 30 carbon atoms.

According to another embodiment, R1 is a substituted or unsubstituted trivalent methyl group; a substituted or unsubstituted trivalent ethyl group; a substituted or unsubstituted trivalent propyl group; a substituted or unsubstituted trivalent butyl group; a substituted or unsubstituted trivalent phenyl group; or a substituted or unsubstituted trivalent naphthyl group.

In another embodiment, R1 is a trivalent methyl group; a trivalent ethyl group; a trivalent propyl group; a trivalent butyl group; a trivalent phenyl group; or a trivalent naphthyl group.

In one embodiment of the present specification, L is a direct bond; a substituted or unsubstituted divalent alkyl group having 1 to 30 carbon atoms; or a substituted or unsubstituted divalent aryl group having 6 to 60 carbon atoms.

According to another embodiment, L is a direct bond; a divalent alkyl group having 1 to 30 carbon atoms; or a divalent aryl group having 6 to 60 carbon atoms.

In another embodiment, L is a direct bond; a divalent phenyl group; a divalent biphenyl group; or a divalent naphthyl group.

According to one embodiment of the present specification, a is 0 or 1.

The binder resin may further include a sulfonic acid polyurethane-based resin in addition to the sulfonic acid polyester acryl-based resin, and the binder resin may include the sulfonic acid polyurethane-based resin in 10 parts by weight to 30 parts by weight with respect to 100 parts by weight (based on solid) of the sulfonic acid polyester acryl-based resin.

In the present disclosure, the polyurethane-based resin means a resin including a urethane repeating unit formed through the reaction between a polyol and an isocyanate on the main chain. Herein, the isocyanate is a compound having two or more NCO groups, and the polyol is a compound including two or more hydroxyl groups and may include, for example, a polyester-based polyol, a polycarbonate-based polyol, a polyether polyol and the like, but is not limited thereto. The sulfonic acid polyurethane-based resin means including a monomer including a sulfonic acid salt.

Specifically, examples of the isocyanate may include toluene diisocyanate (TDI), 4,4-diphenylmethan diisocyanate (MDI), 1,5-naphthalene diisocyanate (NDI), tolidine diisocyanate (TODI), hexamethylene diisocyanate (HMDI), isophorone diisocyanate (IPDI), p-phenylene diisocyanate, trans-cyclohexane, 1,4-diisocyanate and xylene diisocyanate (XDI) and the like, but are not limited thereto, and may include one, two or more types thereof.

The polyester-based polyol may be obtained by reacting a polybasic acid component and a polyol component, and herein, examples of the polybasic acid component may include aromatic dicarboxylic acids such as ortho-phthalic acid, isophthalic acid, terephthalic acid, 1,4-naphthalene dicarboxylic acid, 2,5-naphthalene dicarboxylic acid, 2,6-naphthalene dicarboxylic acid, biphenyl dicarboxylic acid or tetrahydrophthalic acid; aliphatic dicarboxylic acids such as oxalic acid, succinic acid, malonic acid, glutaric acid, adipic acid, pimelic acid, suberic acid, azelaic acid, sebacic acid, linoleic acid, maleic acid, fumaric acid, mesaconic acid or itaconic acid; alicyclic dicarboxylic acids such as hexahydrophthalic acid, tetrahydrophthalic acid, 1,3-cyclohexane dicarboxylic acid or 1,4-cyclohexane dicarboxylic acid; or reactive derivatives such as acid anhydrides, alkyl esters and acid halides thereof, but are not limited thereto, and these may be used either alone or as a combination of two or more types.

In addition, the polycarbonate-based polyol may be obtained by reacting a compound having a carbonate group and a polyol component, and herein, examples of the compound having a carbonate group may include diphenyl carbonate, dialkyl carbonate, alkylene carbonate and the like, but are not limited thereto.

Meanwhile, the polyether polyol may be obtained by adding alkylene oxide to the polyol component through ring opening polymerization.

The polyol component is not particularly limited as long as it has two or more hydroxyl groups in the molecule. For example, at least one type selected from the group consisting of ethylene glycol, 1,2-propanediol, 1,3-propanediol, 1,3-butanediol, 1,4-butanediol, neopentyl glycol, pentanediol, 1,6-hexanediol, 1,8-octanediol, 1,10-decanediol, 4,4'-dihydroxyphenylpropane, 4,4'-dihydroxymethylmethane, diethylene glycol, triethylene glycol, polyethylene glycol (PEG), dipropylene glycol, polytetramethylene glycol (PTMG), polypropylene glycol (PPG), 1,4-cyclohexanedimethanol, 1,4-cyclohexanediol, bisphenol A, bisphenol F, glycerin, 1,1,1-trimethylolpropane, 1,2,5-hexatriol, pentaerythritol, glucose, sucrose and sorbitol is preferred. Among these, at least one type selected from the group consisting of polytetramethylene glycol (PTMG), polypropylene glycol (PPG) and polyethylene glycol (PEG) is particularly preferred.

In addition, the polyurethane-based resin of the present specification may be prepared through a one-shot method, a multi-stage method and the like well-known in the art. Specifically, a one-shot method is a method reacting each of the components at once, and a multi-stage method is a method reacting each of the components in stages. In addition, a urethane reaction catalyst may be further included when preparing the polyurethane-based resin.

In the present disclosure, a weight average molecular weight of the binder resin including the sulfonic acid polyester acryl-based resin may be from 1 g/mol to 600,000 g/mol, preferably from 1 g/mol to 40 g/mol, and more preferably from 1 g/mol to 30 g/mol.

According to one embodiment of the present specification, an anti-static primer layer is formed on at least one surface of the transparent base using a composition including the binder resin including the sulfonic acid polyester acryl-based resin described above and an anti-static material. In this case, an optical film having excellent slip property, liquid stability, coating appearance and an anti-static property may be prepared, and the conductive material is preferably poly(3,4-ethylenedioxythiophene) (PEDOT).

When using a sulfonic acid polyester acryl-based resin and PEDOT in one embodiment of the present specification, liquid dispersion is stable when mixing the two materials since water-dispersed PEDOT corresponds to an acid having an early pH 2, and an appearance property when coating and anti-static performance are superior. When water-dispersing using a non-sulfonic acid-based monomer, liquid dispersion is unstable since the pH is 6 or higher, and coating appearance and anti-static performance relatively decline.

According to another embodiment, the anti-static primer layer composition includes the anti-static material in 0.01 parts by weight to 20 parts by weight, specifically in 0.01 parts by weight to 15 parts by weight, and more specifically in 0.01 parts by weight to 10 parts by weight, with respect to 100 parts by weight of the binder resin (based on solid), and includes 100 parts by weight to 2000 parts by weight of water.

When the anti-static material is included in less than 0.01 parts by weight with respect to 100 parts by weight of the binder resin (based on solid), anti-static performance declines, and when included in greater than 20 parts by weight, liquid dispersibility decreases causing poor appearance and cracks.

In addition, the anti-static primer composition may further include additives for enhancing coatability and an anti-static property. The additive may be ethylene glycol (EG), 2-nitroethanol, sorbitol, dimethyl sulfoxide (DMSO), N-methyl-2-pyrrolidione (NMP), dimethylformamide (DMF), tetrahydrofuran (THF) or the like.

According to the present specification, the anti-static primer composition may further include a crosslinking agent. The crosslinking agent may include one or more of adipic acid dihydrazide (ADH), imidazole-based, melamine-based, amine-based, acid anhydride-based, isocyanate-based, mercaptan-based, carboxylic acid-based, polyol-based, polythiol-based and phenol-based, but is not limited thereto.

When further including a crosslinking agent in the anti-static primer layer of the present disclosure, the anti-static primer layer composition may include the crosslinking agent in 0.5 parts by weight to 30 parts by weight, and specifically in 1 parts by weight to 15 parts by weight with respect to 100 parts by weight of the binder resin (based on solid). When the crosslinking agent content satisfies the above-mentioned range, solvent resistance is superior by reaching sufficient hardness without decreasing film orientation.

In the present specification, the anti-static primer layer may further include organic fine particles or inorganic fine particles for preventing blocking. Examples of the inorganic fine particles may include inorganic oxides such as silica, titania, alumina, zirconia, antimony or zinc-based. In addition, examples of the organic fine particles may include silicone-based resins, fluorine-based resins, (meth)acryl-based resins, crosslinked polyvinyl alcohol, melamine-based resins or the like.

Particularly, the fine particles included in the anti-static primer layer are preferably silica. Silica has more superior blocking inhibition ability and has excellent transparency thereby hardly produces haze, and there is no coloration as well, and accordingly, influences on the optical properties of a polarizing plate are smaller.

Meanwhile, the organic fine particles and the inorganic fine particles preferably have an average diameter (average first particle diameter) of approximately 50 nm to 500 nm or approximately 100 nm to 300 nm. When the average diameter of the organic fine particles and the inorganic fine particles satisfies the above-mentioned numerical range, stability of coating and primer solution is superior, and dispersion is even in the solution, which leads to low haze and enhanced film transparency. In addition, by using fine particles having an average diameter in the above-mentioned range, unevenness is properly formed on the primer layer surface, and therefore, friction may be effectively reduced. As a result, the blocking inhibition ability may be more enhanced.

In another embodiment, the organic fine particles or the inorganic fine particles are preferably included in 0.1 parts by weight to 20 parts by weight with respect to 100 parts by weight of the binder resin based on the solid content.

In the present specification, the anti-static primer layer may have surface resistance of 10¹² Ω/□ or less. The anti-static primer layer having surface resistance of greater than 10¹² Ω/□ may cause decline in the anti-static performance.

In one embodiment of the present specification, the transparent base may be a (meth)acryl-based film. Specifically, the protective film may include a (meth)acrylate-based resin, and the film including a (meth)acrylate-based resin may be obtained by molding materials containing the (meth)acrylate-based resin as a main component through extrusion molding.

The (meth) acryl-based film may be a film including a copolymer including an alkyl (meth)acrylate-based unit and a styrene-based unit and an aromatic-based resin having a carbonate portion on the main chain, or may be a film including alkyl(meth)acrylate-based unit, a styrene-based unit, a 3- to 6-membered heteroring unit substituted with at least one carbonyl group and a vinyl cyanide unit. In addition, an acryl-based resin having a lactone structure may be included.

Specific examples of the (meth)acrylate-based resin having a lactone ring structure may include (meth)acrylate-based resins having a lactone ring structure described in Japanese Patent Application Laid-Open Publication No. 2000-230016, Japanese Patent Application Laid-Open Publication No. 2001-151814, Japanese Patent Application Laid-Open Publication No. 2002-120326 and the like.

Examples of the (meth)acrylate-based resin having an aromatic ring may include a resin composition including (a) a (meth)acrylate-based unit including one or more types of (meth)acrylate-based derivatives; (b) an aromatic-based unit having a chain having a hydroxy group-containing portion, and an aromatic portion; and (c) a styrene-based unit including one or more types of styrene-based derivatives described in Korean Patent Application Laid-Open Publication No. 10-2009-0115040. The (a) to (c) units may be included in the resin composition each in a separate copolymer form, or two or more units of the (a) to (c) units may be included in the resin composition in one copolymer form.

A method for preparing the (meth)acrylate-based resin film is not particularly limited, and for example, the (meth)acrylate-based resin film may be prepared by preparing a thermoplastic resin composition by sufficiently mixing a (meth)acrylate-based resin, other polymers, additives and the like using any suitable mixing method, and then film molding the result, or the (meth)acrylate-based resin film may be prepared by preparing an (meth)acrylate-based resin, other polymers, additives and the like as separate solutions, then forming a uniformly mixed solution by mixing the separately prepared solutions, and film molding the result.

The thermoplastic resin composition may be prepared by, for example, pre-blending the film raw materials using any suitable mixer such as an omni mixer, and then extrusion kneading the obtained mixture. In this case, the mixer used in the extrusion kneading is not particularly limited, and for example, any suitable mixer including an extruder such as a monoaxial extruder and a biaxial extruder, a pressurized kneader, and the like, may be used.

Examples of the film molding method may include any suitable film molding method such as a solution casting method, a melting extrusion method, a calendar method and an extrusion molding method, and although not limited thereto, a solution casting method or a melting extrusion method is preferred.

Examples of a solvent used in the solution casting method may include aromatic hydrocarbons such as benzene, toluene and xylene; aliphatic hydrocarbons such as cyclohexane and decaline; esters such as ethyl acetate and butyl acetate; ketones such as acetone, methyl ethyl ketone and methyl isobutyl ketone; alcohols such as methanol, ethanol, isopropanol, butanol, isobutanol, methyl cellosolve, ethyl cellosolve and butyl cellosolve; ethers such as tetrahydrofuran and dioxane; halogenated hydrocarbons such as dichloromethane, chloroform and carbon tetrachloride; dimethylformamide; dimethyl sulfoxide, and the like. These solvents may be used either alone or as a combination of two or more types.

Examples of a device to use in the solution casting method may include a drum-type casting machine, a band-type casting machine, a spin coater and the like. Examples of the melting extrusion method may include a T die method, an inflation method and the like. The molding temperature is preferably from 150°C to 350°C, and more preferably from 200°C to 300°C, but is not limited thereto.

When a film is molded using the T die method, a film having a roll shape may be obtained by mounting a T die at the front end of a known monoaxial extruder or a biaxial extruder, and winding the film extruded to a film shape. Herein, the film may be monoaxially oriented by applying orientation in the extrusion direction by properly adjusting the temperature of a winding roll. In addition, the film may be simultaneous biaxially oriented, sequential biaxially oriented and the like by orienting the film in the perpendicular direction to the extrusion direction.

The (meth)acryl-based film may be any one of an unoriented film or an oriented film. When the (meth)acryl-based film is an oriented film, it may be either a monoaxially oriented film or a biaxially oriented film, and when the (meth)acryl-based film is a biaxially oriented film, it may be any one of a simultaneous biaxially oriented film or a sequential biaxially oriented film. Film performance is improved when the film is biaxially oriented since mechanical strength is improved. By mixing the acryl-based film with other thermoplastic resins, an increase in the phase difference may be suppressed even when the film is oriented, and optical isotropy may be maintained.

The orientation temperature is preferably in a range near a glass transition temperature of a thermoplastic resin composition, a film raw material, and is preferably in a range of (glass transition temperature-30°C) to (glass transition temperature+100°C), and more preferably in a range of (glass transition temperature-20°C) to (glass transition temperature+80°C). When the orientation temperature is less than (glass transition temperature-30°C), there may be a problem in that sufficient degree of orientation may not be obtained. On the contrary, when the orientation temperature is greater than (glass transition temperature+100°C), there may be a problem in that the flow of the resin composition occurs and stable orientation may not be carried out.

The degree of orientation defined by an area ratio is preferably from 1.1 times to 25 times, and more preferably from 1.3 times to 10 times. The degree of orientation being less than 1.1 times may not lead to improvement in toughness, which accompanies orientation. The degree of orientation being greater than 25 times may cause concern such that as much effects as the increased degree of orientation may not be recognized.

The orientation rate is preferably from 10%/min to 20,000%/min in one direction, and more preferably from 100%/min to 10,000%/min. When the orientation rate is less than 10%/min, there may be a problem in that manufacturing costs may increase since relatively a long period time is required to obtain sufficient degree of orientation. When the orientation rate is greater than 20,000%/min, there may be a problem in that the oriented film may break and the like.

Heat treatment (annealing) and the like may be carried out on the (meth)acryl-based film after orientation in order for stabilizing optical isotropy or mechanical properties of the film. Conditions for the heat treatment are not particularly limited, and any suitable condition known in the art may be employed.

According to one embodiment of the present specification, the anti-static primer layer may be formed by coating the anti-static primer composition of the present disclosure on at least one surface of the (meth) acryl-based film, and herein, the coating may be carried out using a method of coating the primer composition on a base film using methods well known in the art such as a bar coating method, a gravure coating method and a slot die coating method, and drying the result. Herein, the drying may be carried out through a convection oven and the like, but the method is not limited thereto, and the drying may be preferably carried out for 1 minute to 5 minutes at a temperature of 100°C to 120°C. The drying temperature varies depending on the steps of the coating, and for films completed with orientation, the drying may be carried out in a temperature range that does not exceed a glass transition temperature (Tg) of the film, and when orientation is included, the drying is simultaneously carried out with the orientation at a temperature of the orientation, and the drying is carried out in a temperature range that does not exceed a decomposition temperature (Td) of the film.

In addition, in the (meth)acryl-based film according to the present specification, surface treatment may be carried out on at least one surface of the (meth) acryl-based film before forming the anti-static primer layer in order to enhance adhesive strength or attachment strength with the anti-static primer layer, and herein, the surface treatment method may include one or more types selected from the group consisting of alkali treatment, corona treatment and plasma treatment.

The anti-static primer layer formed using a method as above has a thickness of 10 nm to 500 nm. Specifically, the anti-static primer layer has a thickness of 50 nm to 400 nm or 100 nm to 300 nm. When the coating layer has a thickness satisfying the above-mentioned numerical range, the coating layer is transparent, and has excellent adhesive property, attachment property and winding property.

In addition, the anti-static primer layer-formed (meth)acryl-based film may be oriented as necessary, and may be monoaxially or biaxially oriented. The degree of orientation is from 1 time to 5 times, and more preferably from 2 times to 3 times.

Meanwhile, the optical film according to the present specification further includes a surface treatment coating layer on the anti-static primer layer. The surface treatment coating layer means a functional layer such as anti-glare coating, anti-reflective coating (LR, AGLR), low refractive coating, hard coating, glare reducing coating (AG, SG) or high color reproduction coating (LAS). FIG. 1 illustrates a lamination structure of an optical film according to an embodiment of the present disclosure.

The surface treatment coating layer formed on the anti-static primer layer may be formed in a single layer structure, or in a multilayer structure of two or more layers.

In addition, the surface treatment coating layer formed on the anti-static primer layer has surface resistance of 10¹²Ω/ □ or less. The surface treatment coating layer having surface resistance of greater than 10¹²Ω/ □ reduces anti-static performance causing concern of being vulnerable to damages resulting from static electricity.

Herein, the composition for surface treatment coating forming the surface treatment coating layer may be formed in various compositions depending on the functions to provide, and may include, for example, a binder resin, fine particles and a solvent, and as necessary, may further include additives.

For example, in the present specification, the binder resin of the composition for forming a surface treatment coating layer may be an acryl-based binder resin well-known in the art.

The type of the acryl-based binder resin is not particularly limited, and those known in the art may be used without particular limit. Examples of the acryl-based binder resin may include an acrylate monomer, an acrylate oligomer or a mixture thereof. Herein, the acrylate monomer or the acrylate oligomer preferably includes at least one or more acrylate functional groups capable of participating in a curing reaction.

The types of the acrylate monomer and the acrylate oligomer are not particularly limited, and those commonly used in the art may be selected and used without limit.

In addition, as the acrylate oligomer, a urethane acrylate oligomer, an epoxy acrylate oligomer, polyester acrylate, polyether acrylate, a mixture thereof or the like may be used. As the acrylate monomer, dipentaerythritol hexaacrylate, dipentaerythritol hydroxy pentaacrylate, pentaerythritol tetraacrylate, pentaerythritol triacrylate, trimethylene propyl triacrylate, propoxylated glycerol triacrylate, trimethylolpropane ethoxy triacrylate, 1,6-hexanediol diacrylate, propoxylated glycerol triacrylate, tripropylene glycol diacrylate, ethylene glycol diacrylate, a mixture thereof or the like may be included, however, the acrylate monomer is not limited to these examples.

Meanwhile, the content of the solvent may be, although not limited thereto, approximately from 50 parts by weight to 1000 parts by weight with respect to 100 parts by weight of the binder resin. When the solvent content satisfies the above-mentioned range, the functional coating layer has excellent coatability, the coating film has excellent coating strength and is readily prepared to a thick film.

The type of the solvent capable of being used in the present disclosure is not particularly limited, and water is commonly used, and organic solvents may be used as well. For example, one or more types selected from the group consisting of C₁ to C₆ lower alcohols, acetates, ketones, cellosolves, dimethylformamide, tetrahydrofuran, propylene glycol monomethyl ether, toluene, and xylene may be used. For example, the lower alcohols include methanol, ethanol, isopropyl alcohol, butyl alcohol, isobutyl alcohol and diacetone alcohol, the acetates include methyl acetate, ethyl acetate, isopropyl acetate, butyl acetate and cellosolve acetate, and the ketones include methyl ethyl ketone, methyl isobutyl ketone, acetyl acetone and acetone, however, the lower alcohols, the acetates and the ketones are not limited thereto.

Meanwhile, the composition for forming a surface treatment coating layer according to the present specification may further include a UV curing initiator added for the purpose of curing through UV irradiation as necessary. The UV curing initiator may include one, two or more types selected from the group consisting of 1-hydroxy cyclohexylphenyl ketone, benzyl dimethyl ketal, hydroxydimethyl acetophenone, benzoin, benzoin methyl ether, benzoin ethyl ether, benzoin isopropyl ether and benzoin butyl ether, but is not limited thereto.

The UV curing initiator is preferably added in 0.1 parts by weight to 10 parts by weight with respect to 100 parts by weight of the binder resin. When the content of the UV curing initiator satisfies the above-mentioned range, sufficient curing may occur, and film strength of the film may be enhanced.

In addition, the composition for forming a surface coating layer according to the present specification may further include one or more types of additives selected from among a labeling agent, a wetting agent and an antifoaming agent. The additives content is 0.01 parts by weight to 10 parts by weight with respect to 100 parts by weight of the binder resin.

In the present specification, the thickness of the surface treatment coating layer may be, although not limited thereto, from 1 µm to 10 µm, and preferably from 2 µm to 6 µm. When the thickness of the surface treatment coating layer satisfies the above-mentioned range, occurrences of cracks and the like may be prevented while obtaining sufficient functional properties.

Meanwhile, the surface treatment coating layer may be formed using a method of coating the composition for forming a surface treatment coating layer on the primer layer of the optical film according to the present specification, and then drying and/or curing the result, and herein, the coating may be carried out using coating methods well known in the art, for example, wet coating such as a roll coating method, a bar coating method, a spray coating method, a dip coating method and a spin coating method. However, the coating method is not limited thereto, and various other coating methods used in the art may be used.

The drying and/or curing may be carried out using a method of irradiating heat and/or light on the composition for forming a surface treatment coating layer coated on the primer layer, and the drying and the curing may be carried out consecutively or simultaneously. However, considering process convenience and the like, the curing is more preferably carried out through irradiating light such as UV. The curing condition may be properly adjusted depending on the mixing ratios or the components of the composition for forming a surface treatment coating layer, and the irradiation may be carried out with an amount of approximately 0.01 J/cm² to 2 J/cm² for 1 second to 10 minutes in the case of electron beam or ultraviolet curing. In the electron beam or ultraviolet curing, when the curing time satisfies the above-mentioned range, the binder resin may be sufficiently cured, and therefore, mechanical properties such as wear resistance are excellent and durability of the acryl-based film may be enhanced.

Meanwhile, the optical film of the present specification may further include extra layers with other purposes in addition to the surface treatment coating layer. For example, a contamination tolerant prevention layer for preventing contamination on a display surface may be further included.

FIG. 1 illustrates a lamination structure of the optical film according to one embodiment of the present disclosure.

Such an optical film of the present specification may be used as a protective film for a polarizing plate. More specifically, the polarizing plate of the present specification includes a polarizer; and the optical film on at least one surface of the polarizer.

Herein, the polarizer is not particularly limited, and polarizers well known in the art such as films formed with polyvinyl alcohol (PVA) including iodine or dichroic dyes are used.

Meanwhile, the polarizing plate according to the present specification may further include an adhesive layer on one surface or both surfaces of the polarizer in order to attach the polarizer and the optical film. For example, the polarizing plate of the present specification may have a structure of one surface being constituted with [transparent base/anti-static primer layer/surface treatment coating layer/adhesive layer/polarizer] based on the polarizer, however, the structure is not limited thereto. Herein, the adhesive capable of being used in forming the adhesive layer may be an aqueous or non-aqueous adhesive generally used in the art.

Examples of the aqueous adhesive may include polyvinyl alcohol-based adhesives, acryl-based adhesives, epoxy-based adhesives, urethane-based adhesives and the like. Considering adhesive strength with a polarizer, and the like, polyvinyl alcohol-based adhesives are preferred among these, and modified polyvinyl alcohol adhesives including an acetoacetyl group are particularly preferred among these. Specific examples of the polyvinyl alcohol-based adhesive may include Gohsefiner Z-100, Z-200, Z-200H, Z-210, Z-220, Z-320 and the like manufactured by the Nippon Synthetic Chemical Industry Co., Ltd., but are not limited thereto.

Herein, adhesion between the polarizer and the optical film using the aqueous adhesive may be carried out by first coating the adhesive on a surface of the optical film or a PVA film that is the polarizer using a roll coater, a gravure coater, a bar coater, a knife coater, a capillary coater or the like, and laminating the protective film and the polarizer through heat press or room temperature press using a laminating roll before completely drying the adhesive. When using a hot melt-type adhesive, a heat press roll needs to be used.

Meanwhile, the non-aqueous adhesive is preferably an ultraviolet curable, and although not particularly limited thereto, examples thereof may include adhesives using a photoradical polymerization reaction such as (meth)acrylate-based adhesives, ene/thiol-based adhesives and unsaturated polyester-based adhesives, adhesives using a photocation polymerization reaction such as epoxy-based adhesives, oxetane-based adhesives, epoxy/oxetane-based adhesives and vinylether-based adhesives, or the like. Adhesion between the polarizer and the optical film using the non-aqueous adhesive may be carried out using a method of forming an adhesive layer by coating an adhesive composition, laminating the polarizer and the optical film, and then curing the adhesive composition through light irradiation.

Such a polarizing plate according to the present specification has excellent adhesive strength, and has excellent water resistance as well.

Hereinafter, the present specification will be described in detail with reference to examples in order to specifically describe the present specification. However, examples according to the present specification may be modified to various different forms, and the scope of the present specification is not construed as being limited to the examples described below. Examples of the present specification are provided in order to more fully describe the present specification to those having average knowledge in the art.

### <Synthesis Example>

### Synthesis Example 1. Synthesis of Sulfonic Acid Polyester Resin A

A 500 ml round bottom flask was substituted with nitrogen, and ethylene glycol, diethyl glycol, sodium sulfonyl isophthalic acid and isophthalic acid were introduced thereto in a molar ratio of 0.5:0.5:0.1:0.9, and an esterification reaction was progressed for 2 hours at 200ºC to discharge a theoretical amount of water. Tetramethyl titanate, antimony acetate and t-butyltin oxide were used as a catalyst, and trimethyl phosphate was added as a stabilizer to continuously discharge water, and then a condensation polymerization reaction was carried out for 150 minutes at 255ºC under a reduced pressure of 3.3 mbar (2.5 torr) or lower to prepare sulfonic acid polyester resin A. Total solid except water was 30 wt% in the resin, a glass transition temperature was approximately 60ºC, and a minimum film-forming temperature was approximately 90ºC.

### Synthesis Example 2. Synthesis of Sulfonic Acid Polyester Acrylic Resin B

Glycidylethyl (meth)acrylate and methyl (meth)acrylate were introduced to the polyester resin A in a weight ratio of 40:60. The result was cooled, then a reactant and a thermal initiator were introduced thereto while stirring the result at a high speed in water, and the temperature was raised to 80ºC to prepare sulfonic acid polyester acrylic resin B for 2 hours. The weight ratio of the polyester and the acryl was 5:5, and the weight ratio of the polyester:glycidylethyl (meth)acrylate:methyl (meth)acrylate was 5:2:3. Total solid except water was 30 wt% in the resin, a glass transition temperature was approximately 60ºC, and a minimum film-forming temperature was approximately 80ºC.

As for the glass transition temperature, the water-dispersible resin as above was dried, then the temperature was raised to -30ºC to 150ºC using a differential scanning calorimetry (manufactured by DSC Mettler), and a glass transition temperature at a second run was measured. The minimum film-forming temperature was measured using a minimum film-forming temperature measuring device (manufactured by Rhopoint Instruments Limited).

### <Example>

### Example 1.

After preparing a poly(cyclohexylmaleimide-co-methyl methacrylate) (LG MMA PMMA830HR) resin to an unoriented acryl-based film having a width of 800 mm under a condition of 250°C and 250 rpm using a T-die film-forming apparatus, the film was oriented by 1.8 times in an MD direction at a temperature of 135°C.

19.9 g of the sulfonic acid polyester acrylic resin B of the synthesis example, 12.8 g of an anti-static material (PEDOT, solid 1.4% aqueous solution) and 67.3 g of pure water were mixed to prepare a primer coating solution. After that, the coating solution prepared above was coated on the acryl-based film oriented in an MD direction using a Mayer bar, and the result was oriented by 2.5 times in a TD direction at a temperature of 135°C for 1 minute to prepare a film having a primer layer.

After that, an acryl-based UV curable surface treatment solution was coated on the optical film primer layer, the result was hot-air dried for 2 minutes at a temperature of 60°C, and then UV cured to prepare a surface treatment coating layer (SG)-formed acryl-based optical film. Herein, the thickness of the primer layer was 200 nm and the thickness of the surface treatment coating layer was 4 µm.

### Example 2.

An optical film was prepared in the same manner as in Example 1 except that 0.42 g of a crosslinking agent (Nippon Kasei Chemical, adipic acid dihydrazide, powder) was added, and the pure water amount was changed to 66.88 g when preparing the primer coating solution.

### <Comparative Example>

### Comparative Example 1.

An optical film was prepared in the same manner as in Example 1 except that the primer coating was skipped.

### Comparative Example 2.

An optical film was prepared in the same manner as in Example 1 except that a carboxylic acid polyester acrylic resin (TAKAMASTU ATX-060: solid 25% dispersion liquid) was used instead of the sulfonic acid polyester acrylic resin B as the binder resin when preparing the primer coating solution.

### Comparative Example 3.

An optical film was prepared in the same manner as in Example 1 except that a carboxylic acid polyurethane resin (ADEKA SPX-0775-5: solid 30% dispersion liquid) was used instead of the sulfonic acid polyester acrylic resin B as the binder resin when preparing the primer coating solution.

### Comparative Example 4.

An optical film was prepared in the same manner as in Example 1 except that a sulfonic acid polyester resin (TAKAMASTU NSX-640: solid 25% dispersion liquid) was used instead of the sulfonic acid polyester acrylic resin B as the binder resin when preparing the primer coating solution.

### Comparative Example 5.

An optical film was prepared in the same manner as in Example 2 except that the anti-static material was treated in the surface treatment solution instead of the primer solution.

### <Experimental Example>

### Experimental Example 1. Evaluation on Attachment Property

After a 10×10 cut having a width of 1 mm was made in each of the surface treatment coating layers prepared according to the examples and the comparative examples, a tape was attached thereto, and then attachment was evaluated by the degree of the coating layer being detached when the tape was removed. The number of the detached cells being 0 to 20 was evaluated as OK, and the number of the detached cells being 21 or greater was evaluated as NG. The results are shown in the following Table 1.

### Experimental Example 2. Evaluation on Gloss

Gloss of each of the surface-treated films according to the examples and the comparative examples was evaluated under a 60° condition using a MICRO TRI-gloss BYK. The measurement value being within 80±10 was evaluated as OK, and the value being outside the range was evaluated as NG. The results are shown in the following Table 1.

### Experimental Example 3. Surface Resistance Measurement

3 points on the surface of each of the surface treatment coating layers prepared according to the examples and the comparative examples were measured for 10 seconds at 500 V to measure surface resistance (Ω/□) using a high resistivity meter (MCP-HT800/MITSUBISHI CHEMICAL ANALYTECH) and a probe (URS, UR 100), and the unit of the average value is shown in the following Table 1. The unit being 10¹² or less was determined as having an anti-static effect.

### Experimental Example 4. Evaluation on Coating Appearance

5 points on the film were measured using a haze meter (HM-150/MURAKAMI), standard JIS K 7136, coating appearance was evaluated to be favorable (O) only when a haze average value was 0.5% or less, and a difference between the maximum value and the minimum value was 0.2% or less, and when any one of these was not satisfied, it was evaluated to be poor (X).

**[Table 1]**

| Category | Base | Anti-Static Primer Layer | | | | Surface Treatment Liquid | After Surface Treatment Coating | | |
|---|---|---|---|---|---|---|---|---|---|
| | | Binder Resin | Cross linking Agent | Anti-Static Material | Coating Appearance | | Attachment Strength | Gloss | Surface Resistance (Ω/□) |
| Example 1 | Acryl | Sulfonic Acid PES/Acrylic Water-Dispersible Resin | - | PEDOT | O | SG | OK | OK | 10¹² |
| Example 2 | Acryl | Sulfonic Acid PES/Acrylic Water-Dispersible Resin | Cross linking Agent | PEDOT | O | SG | OK | OK | 10¹² |
| Comparative Example 1 | acryl | - | - | - | - | SG | NG | OK | >10¹⁵ |
| Comparative Example 2 | acryl | Carboxylic Acid PES/Acrylic Water-Dispersible Resin | - | PEDOT | X | SG | NG | OK | 10¹² |
| Comparative Example 3 | acryl | Carboxylic Acid PUD Water-Dispersible Resin | - | PEDOT | X | SG | NG | OK | 10¹² |
| Comparative Example 4 | acryl | Sulfonic Acid PES Water-Dispersible Resin | - | PEDOT | O | SG | NG | OK | 10¹² |
| Comparative Example 5 | acryl | Sulfonic Acid PES/Ac rylic Water-Dispersible Resin | Cross linki ng Agent | - | O | SG + PEDOT | OK | NG | 10¹² |

From the results of Table 1, it was identified that the optical films of Examples 1 and 2 according to the present disclosure had excellent attachment strength and/or gloss values compared to Comparative Examples 1 to 5. Particularly, it was identified that Examples 1 and 2 had excellent anti-static primer layer coating appearance and optical film attachment strength compared to Comparative Example 2 using a binder resin that did not include a sulfonic acid salt, and had excellent optical film attachment strength compared to Comparative Example 4 using a sulfonic acid polyester resin.

## Claims

1. An optical film comprising:
a transparent base;
an anti-static primer layer provided on at least one surface of the transparent base, and including a binder resin including a sulfonic acid polyester acryl-based resin, and an anti-static material; and
a surface treatment coating layer provided on the anti-static primer layer.

2. The optical film of Claim 1, wherein the anti-static material includes poly-3,4-ethylenedioxythiophene (PEDOT).

3. The optical film of Claim 1, wherein the anti-static material is included in 0.01 parts by weight to 20 parts by weight with respect to 100 parts by weight of the binder resin based on a solid content.

4. The optical film of Claim 1, wherein the sulfonic acid polyester acryl-based resin includes a monomer represented by the following Chemical Formula 1: 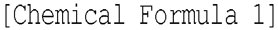 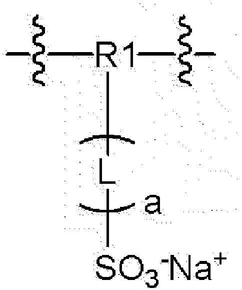 in Chemical Formula 1,
R1 is a substituted or unsubstituted trivalent alkyl group; or a substituted or unsubstituted trivalent aryl group;
L is a direct bond; a substituted or unsubstituted divalent alkyl group; or a substituted or unsubstituted divalent aryl group;
a is an integer of 0 to 3; and
when a is 2 or greater, 2 or more Ls are the same as or different from each other.

5. The optical film of Claim 1, wherein the anti-static primer layer has a thickness of 10 nm to 500 nm.

6. The optical film of Claim 1, wherein the anti-static primer layer further includes a crosslinking agent.

7. The optical film of Claim 6, wherein the crosslinking agent includes one or more of adipic acid dihydrazide (ADH), imidazole-based, melamine-based, amine-based, acid anhydride-based, isocyanate-based, mercaptan-based, carboxylic acid-based, polyol-based, polythiol-based and phenol-based.

8. The optical film of Claim 1, wherein the anti-static primer layer further includes organic fine particles or inorganic fine particles.

9. The optical film of Claim 8, wherein the organic fine particles or the inorganic fine particles are included in 0.1 parts by weight to 20 parts by weight with respect to 100 parts by weight of the binder resin based on a solid content.

10. The optical film of Claim 1, wherein the transparent base is a (meth)acryl-based film.

11. A polarizing plate comprising:
a polarizer; and
the optical film of any one of Claims 1 to 10 on at least one surface of the polarizer.

## Patentansprüche

1. Optischer Film, umfassend:
eine transparente Basis;
eine antistatische Grundierungsschicht, die auf mindestens einer Oberfläche der transparenten Basis bereitgestellt ist, und ein Bindemittelharz, das ein Harz auf Sulfonsäurepolyester-Acrylbasis beinhaltet, und ein antistatisches Material beinhaltet; und
eine Oberflächenbehandlung-Beschichtungsschicht, die auf der antistatischen Grundierungsschicht bereitgestellt ist.

2. Optischer Film nach Anspruch 1, wobei das antistatische Material Poly-3,4-Ethylendioxythiophen (PEDOT) beinhaltet.

3. Optischer Film nach Anspruch 1, wobei das antistatische Material in 0,01 Gewichtsanteilen bis 20 Gewichtsanteilen, bezogen auf 100 Gewichtsanteile des Bindemittelharzes, bezogen auf den Feststoffgehalt, beinhaltet ist.

4. Optischer Film nach Anspruch 1, wobei das Harz auf Sulfonsäurepolyester-Acrylbasis ein Monomer beinhaltet, das durch die folgende chemische Formel 1 dargestellt ist: 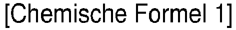 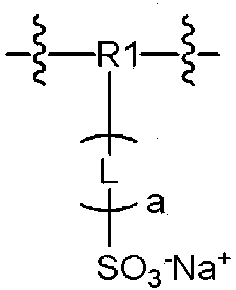 in der chemischen Formel 1
ist R1 eine substituierte oder unsubstituierte dreiwertige Alkylgruppe; oder eine substituierte oder unsubstituierte dreiwertige Arylgruppe;
ist L eine direkte Bindung; eine substituierte oder unsubstituierte zweiwertige Alkylgruppe; oder eine substituierte oder unsubstituierte zweiwertige Arylgruppe;
a eine ganze Zahl von 0 bis 3 ist; und
wenn a 2 oder größer ist, sind 2 oder mehrere L gleich oder verschieden voneinander.

5. Optischer Film nach Anspruch 1, wobei die antistatische Grundierungsschicht eine Stärke von 10 nm bis 500 nm aufweist.

6. Optischer Film nach Anspruch 1, wobei die antistatische Grundierungsschicht ferner ein Vernetzungsmittel beinhaltet.

7. Optischer Film nach Anspruch 6, wobei das Vernetzungsmittel eines oder mehrere von Adipinsäuredihydrazid (ADH), Imidazol-basiert, Melaminbasiert, Amin-basiert, Säureanhydrid-basiert, Isocyanat-basiert, Mercaptanbasiert, Carbonsäure-basiert, Polyol-basiert, Polythiol-basiert und Phenolbasiert beinhaltet.

8. Optischer Film nach Anspruch 1, wobei die antistatische Grundierungsschicht ferner organische Feinpartikel oder anorganische Feinpartikel beinhaltet.

9. Optischer Film nach Anspruch 8, wobei die organischen Feinpartikel oder die anorganischen Feinpartikel in 0,1 Gewichtsanteilen bis 20 Gewichtsanteilen, bezogen auf 100 Gewichtsanteile des Bindemittelharzes, bezogen auf einen Feststoffgehalt, beinhaltet sind.

10. Optischer Film nach Anspruch 1, wobei die transparente Basis ein Film auf (Meth)acrylbasis ist.

11. Polarisierende Platte, umfassend:
einen Polarisator; und
den optischen Film nach einem der Ansprüche 1 bis 10 auf mindestens einer Oberfläche des Polarisators.

## Revendications

1. Film optique comprenant :
une base transparente ;
une couche d'apprêt antistatique ménagée sur au moins une surface de la base transparente, et incluant une résine liante incluant une résine à base d'acryle de polyester d'acide sulfonique, et un matériau antistatique ; et
une couche de revêtement de traitement de surface ménagée sur la couche d'apprêt antistatique.

2. Film optique selon la revendication 1, dans lequel le matériau antistatique comprend du poly-3,4-éthylènedioxythiophène (PEDOT).

3. Film optique selon la revendication 1, dans lequel le matériau antistatique est inclus dans 0,01 partie en poids à 20 parties en poids par rapport à 100 parties en poids de la résine liante sur la base d'une teneur en solides.

4. Film optique selon la revendication 1, dans lequel la résine à base d'acryle de polyester d'acide sulfonique inclut un monomère représenté par la formule chimique 1 suivante : 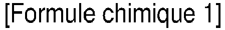 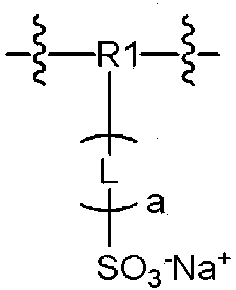 dans la Formule chimique 1,
R1 est un groupe alkyle trivalent substitué ou non substitué ; ou un groupe aryle trivalent substitué ou non substitué ;
L est une liaison directe ; un groupe alkyle divalent substitué ou non substitué ; ou un groupe aryle divalent substitué ou non substitué ;
a est un entier de 0 à 3 ; et
lorsque a est égal ou supérieur à 2, 2 ou plusieurs L sont identiques ou différents les uns des autres.

5. Film optique selon la revendication 1, dans lequel la couche d'apprêt antistatique présente une épaisseur de 10 nm à 500 nm.

6. Film optique selon la revendication 1, dans lequel la couche d'apprêt antistatique inclut en outre un agent de réticulation.

7. Film optique selon la revendication 6, dans lequel l'agent de réticulation inclut un ou plusieurs des agents suivants : dihydrazide d'acide adipique (ADH), à base d'imidazole, à base de mélamine, à base d'amine, à base d'anhydride d'acide, à base d'isocyanate, à base de mercaptan, à base d'acide carboxylique, à base de polyol, à base de polythiol et à base de phénol.

8. Film optique selon la revendication 1, dans lequel la couche d'apprêt antistatique inclut en outre de fines particules organiques ou de fines particules inorganiques.

9. Film optique selon la revendication 8, dans lequel les fines particules organiques ou les fines particules inorganiques sont incluses dans 0,1 partie en poids à 20 parties en poids par rapport à 100 parties en poids de la résine liante sur la base d'une teneur en solides.

10. Film optique selon la revendication 1, dans lequel la base transparente est un film à base de (méth)acrylique.

11. Plaque de polarisation comprenant :
un polariseur ; et
le film optique de l'une quelconque des revendications 1 à 10 sur au moins une surface du polariseur.
